# EUROPEAN PATENT SPECIFICATION

(11) **EP 2 732 218 B1**
(45) Date of publication and mention of the grant of the patent: **09.03.2016**
(21) Application number: 12755903.7
(22) Date of filing: 10.07.2012
(51) Int. Cl.: F24J 2/07, F24J 2/05, B82B 1/00

(54) **SOLAR CONCENTRATION SYSTEM**
SONNENKONZENTRATIONSSYSTEM
SYSTEME DE CONCENTRATION SOLAIRE

(30) Priority: 11.07.2011 EP 11425185
(43) Date of publication of application: 21.05.2014
(73) Proprietor: Università Del Salento - Dipartimento Di Ingegneria Dell'Innovazione, 73100 Lecce (IT)
(72) Inventor: DE RISI, Arturo, 73100 Lecce (IT); MILANESE, Marco, 73010 Arnesano (LE) (IT); COLANGELO, Gianpiero, 73020 Cavallino (LE) (IT); LAFORGIA, Domenico, 70122 Bari (IT)
(74) Representative: Bruni, Giovanni
(86) International application number: PCT/IB2012/053528
(87) International publication number: WO 2013/008181

(56) References cited:
- WO-A1-2011/138752
- US-A1- 2007 084 460

## Description

Object of the present invention is a particular kind of thermodynamic solar concentrator based on the use of gas-based nanofluids and particularly developed for high temperature applications.

One of the main problems in the usage of high temperature solar systems is to individuate easily manipulated thermo-vector fluids guaranteeing the possibility to transport great thermal flows. In the current state of the art, at least two different kinds of thermo-vector fluids are used; the heat-transmitting oils and the mixtures of melted salts. The heat-transmitting oil is one of the first fluids used in this field and is mainly disadvantageous owing to its physical-chemical nature; it cannot exceed temperatures of 390°, over which it begins to loose its peculiar features. Such an aspect influences its performances negatively in the thermodynamic solar plant. Moreover, the heat-transmitting oils are highly toxic and pollutant if dispersed in the environment.

In the following, other kinds of fluids have been used, such as for example the mixtures of melted salts, with which it is possible to reach thermo-vector fluid temperatures approximately of 550°C, but there result disadvantageous complications of the plant. The main problems concerning the use of melted salts in the thermodynamic solar plants is linked to the need to maintain the same constantly at a temperature higher than 250°C in order not to generate solidification problems thereof inside the plant thus resulting in inevitable blocks of functioning and high maintenance costs for resetting the operative conditions. In order to maintain the above-described minimum level of temperature, and to allow the thermal transients to be exceeded, downstream of the solar concentrators, the plant typically consists of two thermal accumulation systems, a so-called hot and cold well, generally made up of great dimensioned thermal reservoirs. Said heat accumulation systems imply high realization and maintenance costs, even guaranteeing an approximately constant electric energy production in 24 hours.

Therefore, at the current state of the art it results quite clear both the need to individuate a thermo-vector fluid solving the above-described disadvantages, and the contemporaneous study of a concentrator provided with a "receiver element" which allows to use the new thermo-vector fluid individuated.

In this perspective, a category of very convenient fluids both for thermal features and for the simplicity in manipulating the thermodynamic solar plants is represented by the nanofluids. The idea of increasing the thermal exchange in the fluids by suspending high thermal conductive material particles was proposed by Maxwell in "A Treatise on Electricity and Magnetism" in 1881. The use of nanobeads is disclosed in document US 2007 084460.

Anyway, the nanofluids are relatively new. They represent a category of new fluids for the thermal exchange, obtained by dispersing inside a base fluid solid particles with thermal conductivity higher than the base fluid one and with dimensions lower than 50 nm. Experimentally, it is observed that the increase in thermal conductivity of the nanofluid is higher than the one which would be obtained by the simple average weighing of the single conductivities; moreover the nanoparticles determine an increase in the coefficient of convective thermal exchange surface-nanofluid with respect to the surface-base fluid case. In order to overcome the technological limitations mentioned before about traditional heat transfer fluids (synthetic oil or molten salt) some experiments have been carried out in the world using air as the working fluid of the plant; however, these experiments have revealed considerable problems of technological character, mainly linked to the combination of high pressures and temperatures needed for the operation plant. With respect to those first experiences about solar collectors based on air as heat transfer fluid, nanoparticles allow to increase the heat capacity rate of the heat transfer fluid, reducing working pressures and solving several technical problems.

Thanks to the reduced dimensions, the nanoparticles remain in suspension even at very low flow speeds thus avoiding deposits, unlike what would happen with particles with greater diameter. Moreover, thanks to the very low diameter the exchange surface of the nanoparticles is approximately 1000 times higher than the one which would be obtained with micrometric particles. The great exchange surface and the low mass are two fundamental features which make the use of nanoparticles particularly indicated to provide suspensions apt for the heat transfer.

In order to obtain an improvement of the thermal properties of the fluid, particles both of metal and non metal nature can be used in variable concentrations. The studies about the nanofluids demonstrate that it is possible to use low concentrations of nanoparticles to improve significantly the thermal properties of the base fluid.

Another advantage of the nanofluids in general concerns the increase in the coefficient of optic absorption with respect to the base fluid. The absorption is an optic property which is realized when, upon putting a portion of substance in contact with the electromagnetic radiation, it is able to absorb energy from the same radiation. Such an absorption is function not only of the nature of the substance, but also of the radiation and in particular of its wave length. The coefficients of absorption of the nanofluids result high, above all in the visible region.

The use of gas-based nanofluids can produce a significant increase in the performance of the thermodynamic solar systems under the effect of the direct absorption of the solar radiation inside the receiver. Moreover, the use of gas-based nanofluids can make easier the thermodynamic solar plants control, since there is no need of great thermal accumulation systems, which today are indispensable in the plants which use the melted salts as thermo-vector fluid.

In the present invention it is proposed a solution alternative to the use of traditional heat transfer fluids (molten salts, synthetic oils and similar) or liquid-based nanofluid, by the use of a solar receiver transparent in which a gas-based nanofluid can directly absorb solar radiation, improving the thermodynamic performance of the solar system.

The above problems are solved by the solar concentration system of claim 1.

The present description refers to the following tables 1/3 to 3/3, which show a preferred and absolutely not limiting embodiment of the present invention. In particular:

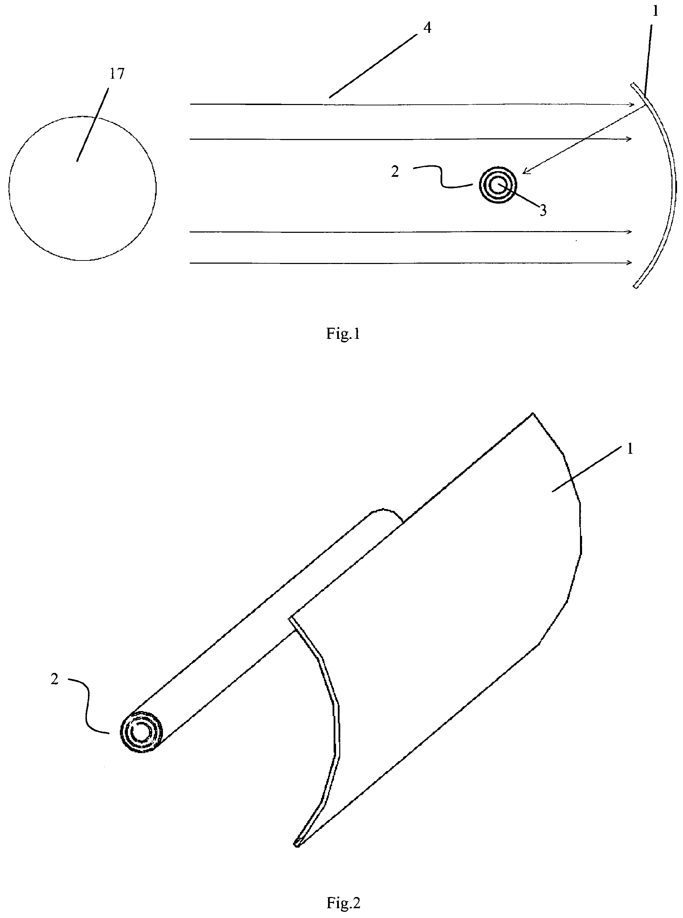

- Fig. 1 shows a scheme of the mechanism of the system for receiving the solar radiation, representing the fundamental elements of the concentration system;
- Fig. 2 shows an axonometric panoramic view of the solar concentrator and receiver tube;
- Fig. 3 shows a detailed view of a preferred embodiment of the receiver tube, with which the solar concentrator is provided;
- Fig. 4 shows a detailed view of a second preferred embodiment of the receiver tube with which the solar concentrator is provided;
- Fig. 5 shows a detailed view of a third embodiment of the receiver tube with which the solar concentrator is provided;
- Fig. 6 shows a ground plan of the thermodynamic plant associated to the solar receivers system;
- Fig. 7 shows a schematization of a solar tower, high temperature, thermodynamic solar plant.

As it is shown in the appended drawings 1 and 2, the present invention provides to arrange in the focal position of the solar concentrator mirror 1 a newly designed receiver 2, inside which the gas-based nanofluid 3 flows, which warms itself upon direct absorption of the concentrated solar radiation 4 coming from the sun 17.

Nanofluid stands for any fluid, inside which nanometric particles are dispersed, which are able to improve the conductive convective, and radiative thermal exchange capacity of the base fluid. In particular, the nanofluids are made up of a base fluid to which nanometric powders of metal oxides are added (CuO, Fe₂O₃, TiO₂, ZnO, MoO₃, etc...) or other materials in order to optimize the thermal properties of the heat transfer fluid. As it is stated before, in the proposed invention heat transfer fluid may be a mixture of a gas with absorbing sub-micrometer particles (CuO, Fe₂O₃, TiO₂, ZnO, MoO₃ or other materials as for example metals). The gas-based nanofluid, in fact, could be a mixture consisting of a base fluid (air, nitrogen or other gas) and nanoparticles dispersed in it.

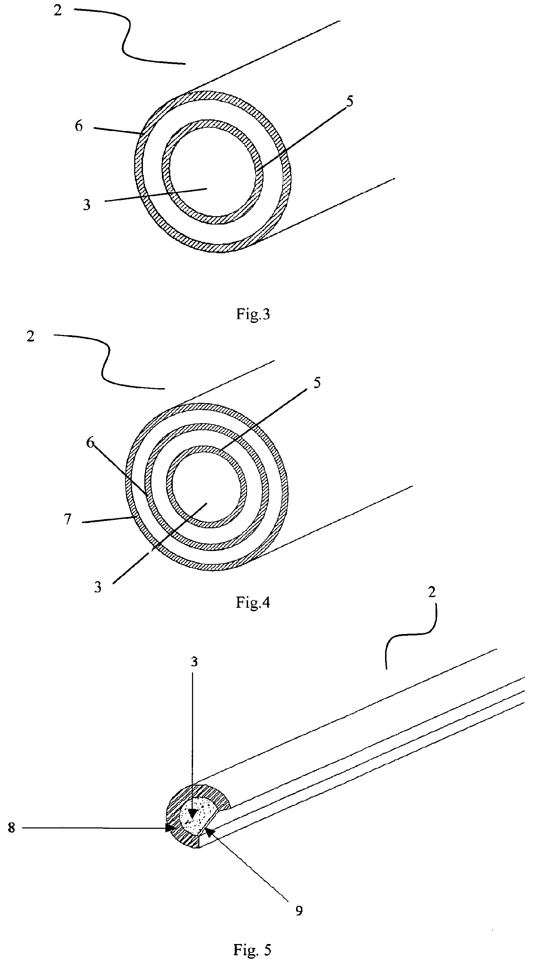

In fig. 3, there is shown a first preferred, absolutely not limiting embodiment of the receiver body 2, which is made up of a plurality of glassed cylindrical ducts, concentric between each other. In an example configuration with two ducts, starting from the innermost duct, 5 indicates the one crossed by the gas-based nanofluid 3 as thermo-vector fluid, 6 indicates the outer duct and between the duct 5 and the duct 6 it is interposed a transparent, at sunlight insulating material (for example air, argon, aerogel etc...) or it is realized the vacuum. This aims at thermally insulating the receiver 2, due to the high temperatures to which the fluid therein is subjected. The same result can be obtained alternatively using three or more concentric ducts as shown in fig. 4.

Fig. 5 instead shows an alternative embodiment of the receiver 2 which provides the use of a duct 3 (inside which the nanofluid flows) thermally insulated by means of an insulating coating 8 and provided with a transparent optic window 9.

The shape and the material for realizing the receiver with concentric tubes 5, 6 and 7 or with optic window 9 can be various provided that the principle of optic absorption of the solar radiation by the gas-based nanofluid is maintained. Therefore, the solar receiver 2 can have different geometric configurations (cylindrical, ellipsoidal, rectangular, polygonal etc...) and different geometries of optic access, which are strictly connected to the kind of solar concentrator.

As previously stated, the use of gas-based nanofluids as thermo-vector fluid in the field of high temperature thermodynamic solar plants allows to remove all the plants complexities generating downstream of the current solar concentration systems which use instead melted salts as thermo-vector fluid. In the systems known in the state of the art, in fact, the system needs to be provided with great thermal accumulation reservoirs to guarantee that the mixture of melted salts does not go under the prefixed temperature thresholds. Moreover, in the case of the gas-based nanofluid simulations have shown that the estimated radiation to thermal energy conversion efficiencies could be higher than 80% at temperatures above 700 K.

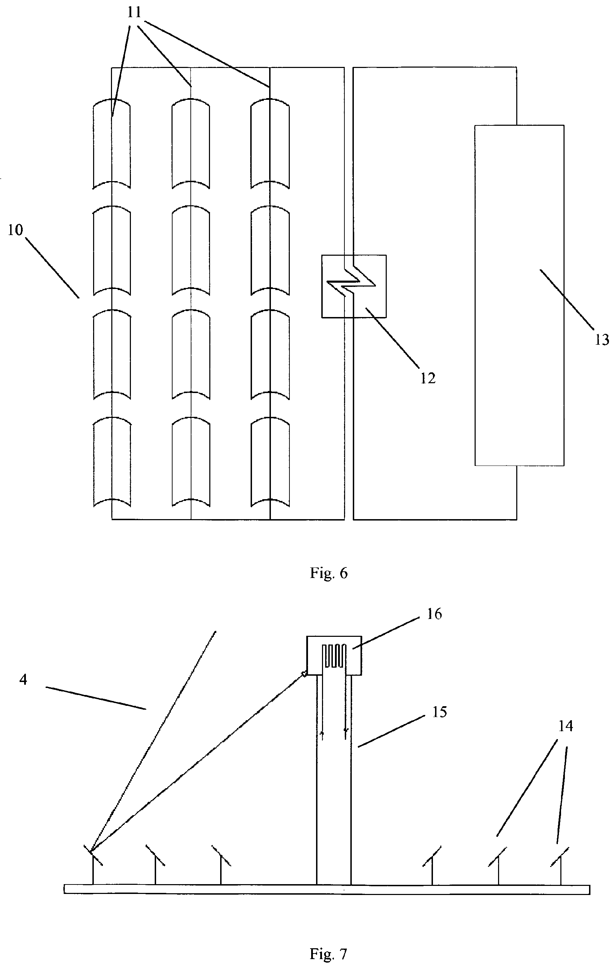

As it is shown in fig. 6, the functioning layout of a thermodynamic solar system using nanofluids as thermo-vector fluid is similar to the one of a traditional system based on the use of melted salts, with the sole difference that the thermal accumulations therein can have very contained dimensions as they do not have to guarantee a minimum functioning temperature to the system equal to 250°C. In this perspective, the heat accumulation serves only to exceed the thermal transients linked to sudden increases or reductions of the solar radiation incident on the system. According to the simplified scheme shown in fig. 5, the field of the solar receivers 10 collects the solar radiation and concentrates it in the system with receiving tubes 11 inside which the nanofluid 3 flows as thermo-vector fluid. Inside the heat exchanger 12 (which substitutes the thermal accumulations provided in the known old systems) the thermo-vector fluid gives heat to a second fluid, which can be used in a not-schematized thermodynamic cycle 13 (for example a Rankine cycle) selected for the purpose of the final production of electric energy.

The same kind of plant can be guaranteed in case the receiver system of the solar radiation is of the solar tower kind, as shown schematically in fig. 7. The advantages of the use of gas-based nanofluids as thermo-vector fluid would remain unchanged, even if the elements constituting the concentration system are changed. The solar tower plants provide usually the use of a plurality of slightly concave reflectors 14 (said heliostats) arranged around a tower 15, located in the middle of the plant, at whose top the receiver element 16 of the solar radiation is arranged. The heliostats 14 are usually moved in coordinated way in order to reflect the solar radiation always towards the top of the tower during the day. As it is shown in the schematic representation of the functioning in fig. 7, the solar radiation 4 hits each single heliostat 4 arranged on the ground and is subsequently reflected towards the top of the tower 15 where a receiver device 16 of the solar radiation is arranged, inside which it is provided a passage of the thermo-vector fluid constituted by the gas-based nanofluid. The nanofluid temperature in this case can exceed 800°C. The thermal energy captured by the nanofluid as thermo-vector is then transferred to a thermodynamic cycle for the final production of electric energy in a similar way as the thermodynamic scheme shown in fig. 6.

## Claims

1. Solar concentration system comprising a solar concentrator mirror (1) with a receiver element (2) in its focal position **characterized in that** the heat transfer fluid flowing inside said receiver element (2) is made up of gas-based nanofluid (3).

2. Solar concentration system according to claim 1, **characterized in that** said heat transfer fluid (3) may be a mixture of gas consisting of a base fluid in particular air or nitrogen, and nanoparticles dispersed in it.

3. Solar concentration system according to claim 1 and 2, **characterized in that** said receiver element (2) is made up of a plurality of glassed cylindrical ducts, concentric between each other (5, 6, 7), between which it is interposed a transparent insulating material or it is realized the vacuum.

4. Solar concentration system according to claim from 1 to 3, **characterized in that** said receiver element (2) is provided with a transparent optic window (9) for the absorption of the direct solar radiation (4) by the nanofluid (3).

5. Solar concentration system according to claim 1 and 4, **characterized in that** the receiver element (2) is thermally insulated by means of an insulating material layer (8).

6. Thermodynamic solar plant using the solar concentration system according to any one of the preceding claims 1 to 5.

7. Solar tower thermodynamic solar plant using the solar concentration system according to any one of the preceding claims 1 to 5.

## Patentansprüche

1. Solarkonzentrationssystem einen Solarkonzentrationsspiegel (1) umfassend, mit einem Empfängerelement (2) in dessen Fokusposition, **dadurch gekennzeichnet dass** das ins Innere des besagten Empfängerelements (2) fließende Wärmeübertragungsfluid aus einem gasbasierten Nanofluid (3) besteht.

2. Solarkonzentrationssystem nach Anspruch 1, **dadurch gekennzeichnet, dass** das besagte Wärmeübertragungsfluid (3) ein Gemisch von Gases sein kann, bestehend aus einem Basisfluid, insbesondere Luft oder Stickstoff und darin dispergierten Nanopartikeln.

3. Solarkonzentrationssystem nach Anspruch 1 und 2, **dadurch gekennzeichnet, dass** das besagte Empfängerelement (2) aus einer Vielzahl von verglasten zylindrischen Leitungen gefertigt wird, die konzentrisch zwischen sich (5, 6, 7) angeordnet sind, wobei zwischen denen ein transparentes isolierendes Material gelagert ist oder ein Vakuum gebildet wird.

4. Solarkonzentrationssystem nach Anspruch 1 bis 3, **dadurch gekennzeichnet, dass** das besagte Empfängerelement (2) mit einem transparenten optischen Fenster (9) für die Absorption der direkten Sonnenstrahlung (4) durch das Nanofluid (3), versehen ist.

5. Solarkonzentrationssystem nach Anspruch 1 und 4, **dadurch gekennzeichnet, dass** das Empfängerelement (2) mittels einer Isoliermaterialschicht (8) thermisch isoliert ist.

6. Thermosolaranlage mit dem Sonnenkonzentrationssystem nach einem der vorhergehenden Ansprüche 1 bis 5.

7. Thermosolaranlage mit Solarturm, die das Sonnenkonzentrationssystem nach einem der vorhergehenden Ansprüche 1 bis 5 verwendet.

## Revendications

1. Système de concentration solaire comprenant un miroir concentrateur solaire (1) avec un élément récepteur (2) dans sa position focale **caractérisé en ce que** le fluide de transfert de chaleur circulant à l'intérieur dudit élément récepteur (2) est constitué par des nano-fluides à base de gaz (3).

2. Système de concentration solaire selon la revendication 1, **caractérisé en ce que** ledit fluide de transfert de chaleur (3) peut être un mélange de gaz constitué d'un fluide de base, en particulier de l'air ou de l'azote et des nanoparticules dispersées en ceux-ci.

3. Système de concentration solaire selon la revendication 1 ou 2, **caractérisé en ce que** ledit élément récepteur (2) est constitué d'une pluralité de conduits cylindriques vitrés, concentriques entre eux (5, 6, 7), entre lesquels est interposé un matériaux isolant transparent ou le vide est réalisé.

4. Système de concentration solaire selon les revendications 1 à 3, **caractérisé en ce que** ledit élément récepteur (2) est muni d'une fenêtre optique transparente (9) pour l'absorption du rayonnement solaire direct (4) par le nano-fluide (3).

5. Système de concentration solaire selon les revendications 1 et 4, **caractérisé en ce que** l'élément récepteur (2) est isolé thermiquement au moyen d'une couche de matériau isolant (8).

6. Installation solaire thermodynamique utilisant le système de concentration solaire selon l'une quelconque des revendications précédentes 1 à 5.

7. Installation solaire thermodynamique à tour, utilisant le système de concentration solaire selon l'une quelconque des revendications précédentes 1 à 5.
